# EUROPEAN PATENT APPLICATION

(11) **EP 3 838 406 A1**
(43) Date of publication of application: **23.06.2021**
(21) Application number: 19871367.9
(22) Date of filing: 07.08.2019
(51) Int. Cl.: B01L 3/00, G01N 35/00

(54) **INTEGRATED CARTRIDGE**

(30) Priority: 11.10.2018 KR 20180121123
(71) Applicant: LG Chem, Ltd., Seoul 07336, (KR)
(72) Inventor: PARK, Chang Ju, Daejeon 34122 (KR); LEE, Sang Hun, Daejeon 34122 (KR); KIM, Dong Hyun, Daejeon 34122 (KR); KIM, Se Ryun, Daejeon 34122 (KR); OH, Jae Hoon, Daejeon 34122 (KR); PARK, Ji Hyun, Daejeon 34122 (KR)
(74) Representative: Hoffmann Eitle
(86) International application number: PCT/KR2019/009868
(87) International publication number: WO 2020/075963

(57) **Abstract**

Disclosed is an integrated cartridge.

According to one aspect of the present invention, provided is an integrated cartridge including a pre-processing part configured to pre-process a sample, an elution part configured to elute an effective component from the sample that is pre-processed in the pre-processing part, and an accommodation part configured to accommodate the effective component. The accommodation part includes a supply unit configured to supply the effective component discharged from the elution part, a storage unit which stores and amplifies the effective component supplied from the supply unit and in which a pipe is provided, and an air discharge unit configured to discharge air existing in the pipe of the storage unit to the outside.

## Description

### CROSS-REFERENCE TO RELATED APPLICATION

The present application claims the benefit of the priority of Korean Patent Application No. 10-2018-0121123, filed on October 11, 2018, which is hereby incorporated by reference in its entirety.

### TECHNICAL FIELD

The present invention relates to an integrated cartridge, and more specifically, to an integrated cartridge for diagnosing or analyzing a target material.

### BACKGROUND ART

A molecular diagnosis is a diagnostic method in which a gene (DNA or RNA) of a target material is directly analyzed to find the infection of disease, base sequence variation, or mutation, thereby enabling early diagnosis of the disease and efficient treatment. In recent, the molecular diagnostic method has been used in various medical fields such as the disease infection confirmation, the genetic testing, and the drug genetics testing.

Various detection methods have been developed for the molecular diagnostic method and, in particular, realtime polymerase chain reaction is being generally and widely used in recent years because of rapidity, convenience, and sensitivity in detection. A probe that is specifically and complementarily bound to a gene of a detection target material is generally used for the realtime polymerase chain reaction, and a fluorescence molecule is bound to the probe. In the realtime polymerase chain reaction, an analysis instrument is used to analyze a wavelength of the fluorescence molecule, thereby achieving quantitative/qualitative analysis for the target gene.

Also, in the molecular diagnostic method, the target material is pre-processed through the realtime polymerase chain reaction or the like, and then, the pre-processed material is analyzed. According to the related art, there have been problems in that the molecular diagnostic equipment increases in size and is also complicated in structure due to each of constituents performing various operations required in a molecular diagnostic process.

### DISCLOSURE OF THE INVENTION

### TECHNICAL PROBLEM

Accordingly, an objective of the present invention is to provide a fluid transfer apparatus having a more simplified and compact structure than the structure of the fluid transfer apparatus according to the related art.

### TECHNICAL SOLUTION

According to one aspect of the present invention in order to achieve the above-described objective, provided is an integrated cartridge including: a pre-processing part configured to pre-process a sample; an elution part configured to elute an effective component from the sample that is pre-processed in the pre-processing part; and an accommodation part configured to accommodate the effective component, wherein the accommodation part includes: a supply unit configured to supply the effective component discharged from the elution part; a storage unit which stores and amplifies the effective component supplied from the supply unit and in which a pipe is provided; and an air discharge unit configured to discharge air existing in the pipe of the storage unit to the outside.

A hole may be defined in each of the supply unit and the air discharge unit, input and output holes, which face holes defined in the supply unit and the air discharge unit, may be respectively defined in both ends of the pipe provided in the storage unit, and when the hole defined in the supply unit matches the input hole, the effective component may be supplied into the pipe.

When the effective component is supplied into the pipe, the hole defined in the air discharge unit and the output hole may match each other to discharge the air existing in the pipe to the outside through the air discharge unit.

The effective component may be transferred in the pipe of the storage unit by capillary force.

A coating layer made of a hydrophilic material that generates the capillary force may be disposed on an inner wall of the pipe of the storage unit.

A coating layer made of a hydrophilic material that generates the capillary force may be disposed on an inner wall of the hole of the supply unit.

A coating layer made of a hydrophobic material that suppresses generation of the capillary force may be disposed on an inner wall of the hole of the air discharge unit.

One hole may be defined in the supply unit, a plurality of pipes may be disposed in the storage unit, and the supply unit may be provided to be rotatable so as to allow the hole of the supply unit to match the input holes of the plurality of pipes.

A plurality of holes may defined in the air discharge unit, a plurality of pipes may be disposed in the storage unit, and the air discharge unit may be provided to be rotatable so as to allow the hole of the air discharge unit to match one of the plurality of output holes respectively defined in the plurality of pipes.

The air discharge unit may have the same number of holes as the output holes defined in the plurality of pipes.

The accommodation part may be provided below the elution part so that the effective component discharged from the elution part is supplied to the supply unit due to gravity or capillary force.

### ADVANTAGEOUS EFFECTS

According to the present invention, the fluid transfer apparatus may be provided, which has the more simplified and compact structure than the structure of the fluid transfer apparatus according to the related art.

### BRIEF DESCRIPTION OF THE DRAWINGS

FIG. 1 is a photograph illustrating an integrated cartridge according to the present invention.
FIG. 2 is a perspective view, a plan view, a bottom view, and a side view illustrating a supply unit of the integrated cartridge according to the present invention.
FIG. 3 is a perspective view illustrating a storage unit of the integrated cartridge according to the present invention.
FIG. 4 is a cross-sectional view illustrating the storage unit of the integrated cartridge, taken along line A-A of FIG. 3, according to the present invention.
FIG. 5 is a perspective view, a plan view, a bottom view, and a side view illustrating an air discharge unit of the integrated cartridge according to the present invention.

### MODE FOR CARRYING OUT THE INVENTION

Hereinafter, a structure of an integrated cartridge according to the present invention will be described with reference to the accompanying drawings.

### Integrated cartridge

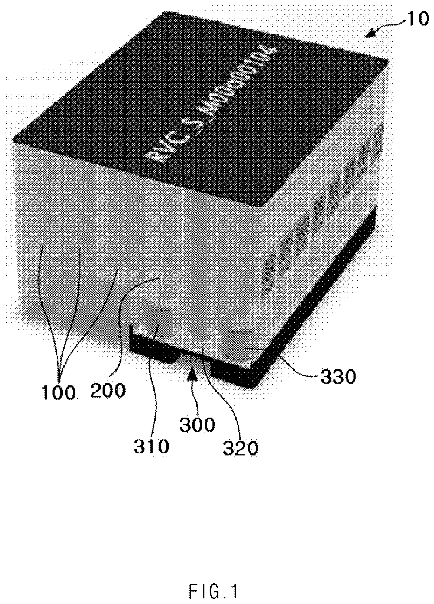

FIG. 1 is a photograph illustrating an integrated cartridge according to the present invention.

As illustrated in FIG. 1, an integrated cartridge 10 according to the present invention may include a pre-processing part 100 that pre-processes a sample. The sample that is pre-processed in the pre-processing part 100 may contain a genetic material having nucleic acid. In the pre-processing part 100, a pre-processing operation required prior to eluting the nucleic acid from the sample may be performed as described below.

Also, the integrated cartridge 10 may include an elution part 200 that elutes an effective component from the sample that is pre-processed in the pre-processing part 100. When the pre-processed sample contains the nucleic acid, the elution part 200 may elute the nucleic acid from the sample. That is, the effective component according to the present invention may be the nucleic acid. However, the effective component according to the present invention is not limited to the nucleic acid. Also, when the effective component is discharged from the elution part 200, water as well as the effective component may be discharged together. Thus, in this specification, the effective component and the water are defined as a 'fluid containing an effective component'.

Also, the integrated cartridge 10 may further include an accommodation part 300 that accommodates the fluid containing the effective component eluted from the elution part 200. As described below, the accommodation part may store the fluid containing the effective component, and the effective component stored in the accommodation part may be amplified inside the accommodation part to increase in amount of the effective component. Here, as illustrated in FIG. 1, the accommodation part 300 may be provided below the elution part 200. In this case, the fluid containing the effective component discharged from the elution part 200 may fall down vertically due to the gravity or capillary force as described below so as to be naturally supplied to the accommodation part 300.

Referring to FIG. 1 again, the accommodation part 300 may include a supply unit 310 that supplies the fluid containing the effective component discharged from the elution part 200. In particular, the supply unit 310 may be provided below the elution part 200. Thus, the fluid containing the effective component discharged from the elution part 200 may fall down vertically due to the gravity or capillary force as described below so as to be supplied to the supply unit 310.

Also, the accommodation part 300 may include a storage unit 320 that stores and amplifies the fluid containing the effective component supplied from the supply unit 310 and may further include an air discharge unit 330 that discharges air existing inside the storage unit 320 to the outside. Hereinafter, a structure of each of the supply unit 310, the storage unit 320, and the air discharge unit 330 will be described in more detail.

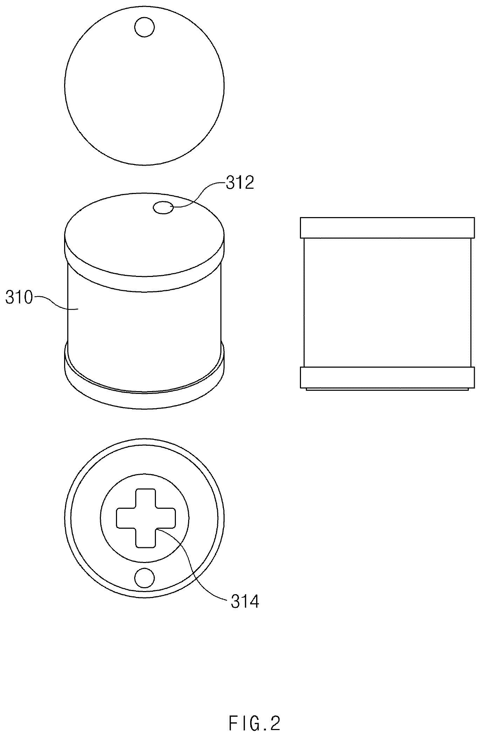

FIG. 2 is a perspective view, a plan view, a bottom view, and a side view illustrating the supply unit of the integrated cartridge according to the present invention.

As illustrated in FIG. 2, a hole 312 may be defined in the supply unit 310. The hole 312 defined in the supply unit 310 may provide a path through which the fluid containing the effective component discharged from the elution part 200 moves. As illustrated in FIG. 2, the hole 312 defined in the supply unit 310 may be defined from a top surface of the supply unit 310 to a bottom surface to pass through the entire supply unit 310 in a thickness direction of the supply unit 310.

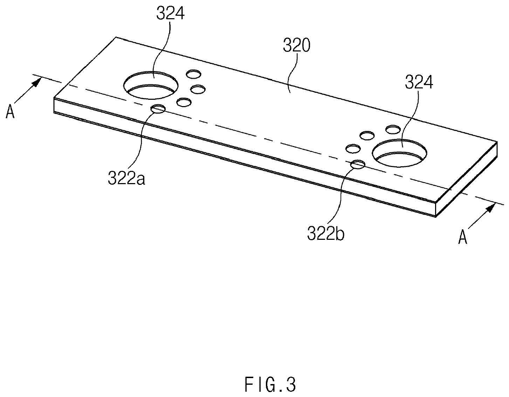

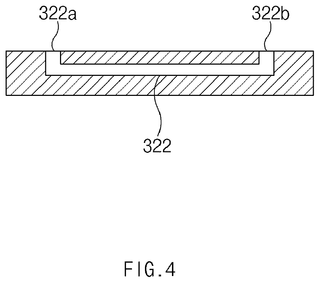

FIG. 3 is a perspective view illustrating the storage unit of the integrated cartridge according to the present invention, and FIG. 4 is a cross-sectional view illustrating the storage unit of the integrated cartridge, taken along line A-A of FIG. 3, according to the present invention.

As illustrated FIGS. 3 and 4, a pipe may be provided in the storage unit 320. An input hole 322a facing the hole 312 defined in the supply unit 310 may be defined in one end of the pipe 322 in a direction of the supply unit 310. The fluid containing the effective component may be supplied from the elution part 200 into the pipe 322 through the hole 312 of the supply unit 310 and the input hole 322a of the pipe 322. That is, according to the present invention, the fluid containing the effective component may be supplied into the pipe 322 when the hole 312 defined in the supply unit 310 and the input hole 322a of the pipe 322 match each other.

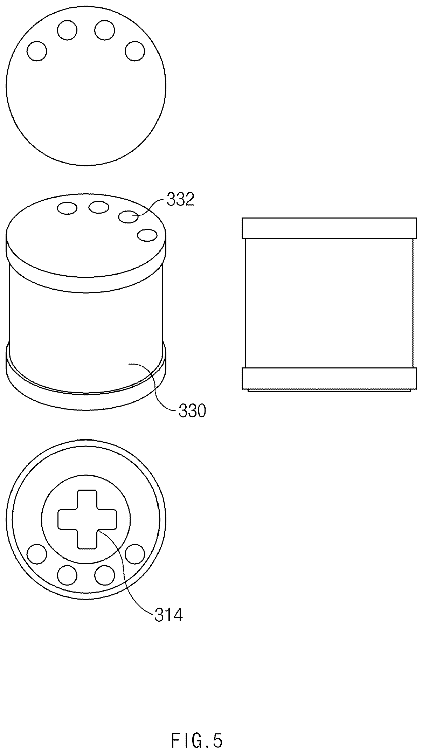

FIG. 5 is a perspective view, a plan view, a bottom view, and a side view illustrating the air discharge unit of the integrated cartridge according to the present invention.

As illustrated in FIG. 5, a hole 332 may also be defined in the air discharge unit 330. The hole 332 defined in the air discharge unit 330 may provide a path through which air existing inside the pipe 322 of the storage unit 320 is discharged to the outside. As illustrated in FIG. 4, the hole 332 defined in the air discharge unit 330 may be defined from a top surface of the air discharge unit 330 to a bottom surface to pass through the entire air discharge unit 330 in a thickness direction of the air discharge unit 330.

Also, as illustrated in FIGS. 3 and 4, an output hole 322b facing the hole 332 defined in the air discharge unit 330 may be defined in the other end of the pipe 322 in a direction of the air discharge unit 330. Thus, according to the present invention, the air existing in the pipe 322 may be discharged to the outside through the air discharge unit 330 when the hole 332 defined in the air discharge unit 330 and the output hole 322b of the pipe 322 match each other. In particular, when the input hole 322a of the pipe 322 matches the hole 312 of the supply unit 310, and simultaneously, the output hole 322b of the pipe 322 matches the hole 332 of the air discharge unit 330, the fluid containing the effective component may be supplied into the pipe 322 through the input hole 322a while the air inside the pipe 322 is discharged to the outside through the output hole 322b.

Also, the pipe 322 of the storage unit 320 according to the present invention may have a very small diameter of 2 mm or less. In this case, it is insufficient to smoothly supply the fluid containing the effective component into the pipe 322 by using only mechanical energy of the fluid containing the effective component. Thus, according to the present invention, the fluid containing the effective component may be transferred in the pipe 322 of the storage unit 320 by capillary force. The feature in which 'the fluid containing the effective component is transferred in the pipe by the capillary force' should be interpreted as meaning that main force for transferring the fluid containing the effective component in the pipe 322 is the capillary force and also should not be interpreted as meaning that force for transferring the fluid containing the effective component in the pipe 322 is only the capillary force.

In order that the fluid containing the effective component is transferred in the pipe 322 by the capillary force, a coating layer made of a hydrophilic material for generating the capillary force may be disposed on an inner wall of the pipe 322 of the storage unit 320. Thus, the fluid containing the effective component may be supplied into the pipe 322 by the capillary force that is generated by the coating layer disposed on the inner wall of the pipe 322 and made of the hydrophilic material.

Similar to the pipe 322, the fluid containing the effective component may also be transferred in the hole 312 of the supply unit 310 by capillary force. For this, a coating layer made of a hydrophilic material for generating the capillary force may be disposed on an inner wall of the hole 312 of the supply unit 310.

Also, it is preferable that, after the fluid containing the effective component is transferred into the pipe 322, the fluid containing the effective component is not discharged from the pipe 322. This is done because, when the fluid containing the effective component is discharged from the pipe 322, efficiency in amplification of the effective component during a subsequent amplification operation may be deteriorated. That is, when the fluid containing the effective component is discharged from the pipe 322, an amount of effective component accommodated inside the pipe 322 is reduced by that the amount of discharged effective component, and thus, the effective component may be not sufficiently reproduced during the subsequent amplification operation. Thus, when the fluid containing the effective component is supplied to the pipe 322 through the input hole 322a, it is necessary to prevent the fluid containing the effective component from being discharged through the output hole 322b.

For this, the coating layer made of the hydrophobic material for suppressing the generation of the capillary force may be disposed on the inner wall of the hole 332 of the air discharge unit 330. Therefore, the efficiency in amplification of the effective component may be enhanced by preventing the fluid containing the effective component supplied into the pipe 322 from being discharged through the output hole 322b.

Also, one hole 312 may be defined in the supply unit 310 as illustrated in FIG. 2, and a plurality of pipes 322 may be disposed in the storage unit 320 as illustrated in FIG. 3 (FIG. 3 illustrates a configuration in which four pipes 322 are disposed, and thus, four input holes 322a and four output holes 322b are defined).

Here, the supply unit 310 may be rotatable. That is, due to the rotation of the supply unit 310, a lower portion of the hole 312 of the supply unit 310 may sequentially match the input holes 322a of the plurality of pipes 322 disposed in the storage unit 320. Also, a protrusion 314 protruding in the form of a cross may be disposed on a lower portion of the supply unit 310 as illustrated in FIG. 2, and a coupling hole 324 having a penetration shape may be defined in the vicinity of the input holes 322a of the storage unit 320 as illustrated in FIG. 3. In particular, the plurality of input holes 322a may be defined along a virtual circumference. In this case, the coupling hole 324 adjacent to the input holes 322a may be defined in a center of a circle constituting the virtual circumference. The protrusion 314 of the supply unit 310 may be coupled to the coupling hole 324 adjacent to the input holes 322a. Thus, according to the present invention, as the protrusion 314 coupled to the coupling hole 324 adjacent to the input holes 322a rotates, the lower portion of the hole 312 of the supply unit 310 may sequentially match the input holes 322a, and as a result, the fluid containing the effective component may be supplied from the hole 312 of the supply unit 310 sequentially to the plurality of pipes 322.

On the other hand, when the plurality of pipes 322 are disposed in the storage unit 320, a plurality of holes 332 may also be defined in the air discharge unit 330 as illustrated in FIG. 5. In addition, the air discharge unit 330 may be rotatable. Furthermore, a protrusion 314 protruding in the form of a cross may be disposed on a lower portion of the air discharge unit 330 as illustrated in FIG. 5, and a coupling hole 324 having a penetration shape may be defined in the vicinity of the output holes 322b of the storage unit 320 as illustrated in FIG. 3. In particular, the plurality of output holes 322b may be defined along a virtual circumference. In this case, the coupling hole 324 adjacent to the output holes 322b may be defined in a center of a circle constituting the virtual circumference. The protrusion 314 of the air discharge unit 330 may be coupled to the coupling hole 324 adjacent to the output holes 322b. Thus, as the protrusion 314 coupled to the coupling hole 324 adjacent to the output holes 322b rotates, lower portions of the holes 332 of the air discharge unit 330 may selectively match the output holes 322b. As a result, it may be controlled according to situations by the rotation of the air discharge unit 330 so that a portion of the holes 332 of the air discharge unit 330 matches a portion of the output holes 322b of the air discharge unit 330, and remaining portions of the holes 332 of the air discharge unit 330 do not match any of the output holes 322b.

It has been described above that the air inside the pipe 322 may be discharged to the outside when the hole 332 of the air discharge unit 330 matches the output hole 322b of the pipe 322. More preferably, as illustrated in FIGS. 3 and 5, the number of holes 332 defined in the air discharge unit 330 may be the same as that of output holes 322b defined in the plurality of pipes 322.

As described above, the coating layer made of the hydrophobic material may be disposed on the inner wall of the hole 332 of the air discharge unit 330 to prevent the fluid containing the effective component inside the pipe 322 from being discharged through the output hole 322b. However, in spite of preventing the fluid containing the effective component from being discharged through the output hole 322b, a portion of the fluid may pass through the output hole 322b to exist in the hole 332 of the air discharge unit 330. Here, if only one hole 332 is provided in the air discharge unit 330, the hole 332 of the air discharge unit 330 sequentially matches the plurality of output holes 322b during the rotation of the air discharge unit 330. In this case, cross contamination in which the effective components introduced to each of the pipes 322 is introduced into other pipes 322 may occur.

To solve the problem such as the cross contamination, the number of holes 332 defined in the air discharge unit 330 may be the same as that of output holes 322b defined in the plurality of pipes 322. In this case, the holes 332 defined in the air discharge unit 330 may one-to-one correspond to the output holes 322b defined in the plurality of pipes 322 to prevent the cross contamination from occurring.

Although the present invention is described by specific embodiments and drawings as described above, the present invention is not limited thereto and it is obvious that various changes and modifications may be made by those having ordinary skill in the art within the technical idea of the present invention and equivalent scope of the appended claims.

## Claims

1. An integrated cartridge comprising:
a pre-processing part configured to pre-process a sample;
an elution part configured to elute an effective component from the sample that is pre-processed in the pre-processing part; and
an accommodation part configured to accommodate the effective component,
wherein the accommodation part comprises:
a supply unit configured to supply the effective component discharged from the elution part;
a storage unit which stores and amplifies the effective component supplied from the supply unit and in which a pipe is provided; and
an air discharge unit configured to discharge air existing in the pipe of the storage unit to the outside.

2. The integrated cartridge of claim 1, wherein a hole is defined in each of the supply unit and the air discharge unit,
input and output holes, which face holes defined in the supply unit and the air discharge unit, are respectively defined in both ends of the pipe provided in the storage unit, and
when the hole defined in the supply unit matches the input hole, the effective component is supplied into the pipe.

3. The integrated cartridge of claim 2, wherein when the effective component is supplied into the pipe, the hole defined in the air discharge unit and the output hole match each other to discharge the air existing in the pipe to the outside through the air discharge unit.

4. The integrated cartridge of claim 2, wherein the effective component is transferred in the pipe of the storage unit by capillary force.

5. The integrated cartridge of claim 4, wherein a coating layer made of a hydrophilic material that generates the capillary force is disposed on an inner wall of the pipe of the storage unit.

6. The integrated cartridge of claim 4, wherein a coating layer made of a hydrophilic material that generates the capillary force is disposed on an inner wall of the hole of the supply unit.

7. The integrated cartridge of claim 4, wherein a coating layer made of a hydrophobic material that suppresses generation of the capillary force is disposed on an inner wall of the hole of the air discharge unit.

8. The integrated cartridge of claim 2, wherein one hole is defined in the supply unit,
a plurality of pipes are disposed in the storage unit, and
the supply unit is provided to be rotatable so as to allow the hole of the supply unit to match the input holes of the plurality of pipes.

9. The integrated cartridge of claim 2, wherein a plurality of holes are defined in the air discharge unit,
a plurality of pipes are disposed in the storage unit, and
the air discharge unit is provided to be rotatable so as to allow the hole of the air discharge unit to match one of the plurality of output holes respectively defined in the plurality of pipes.

10. The integrated cartridge of claim 9, wherein the air discharge unit has the same number of holes as the output holes defined in the plurality of pipes.

11. The integrated cartridge of claim 1, wherein the accommodation part is provided below the elution part so that the effective component discharged from the elution part is supplied to the supply unit due to gravity or capillary force.
